# EUROPÄISCHE PATENTANMELDUNG

(11) **EP 4 216 412 A1**
(43) Veröffentlichungstag der Anmeldung: **26.07.2023**
(21) Anmeldenummer: 22197764.8
(22) Anmeldetag: 26.09.2022
(51) Int. Cl.: H02K 15/095, H02K 15/02

(54) **NADELWICKELVORRICHTUNG UND NADELWICKELVERFAHREN ZUM ERZEUGEN DER POLWICKLUNGEN EINES FSM-ROTORS**

(30) Priorität: 21.01.2022 DE 102022101395
(71) Anmelder: Audi AG, 85057 Ingolstadt (DE)
(72) Erfinder: Gerngroß, Martin, 85125 Kinding (DE); Heilmann, Markus, 80999 München (DE)

(57) **Zusammenfassung**

Die Erfindung betrifft eine Nadelwickelvorrichtung zum Erzeugen der Polwicklungen (140) eines FSM-Rotors (100) durch Umwickeln der Pole (120) eines Rotorkörpers (110) mit Draht (130), wobei die Vorrichtung wenigstens zwei Wickelnadeln (210) aufweist und dazu ausgebildet ist, mit diesen Wickelnadeln (210) wenigstens zwei Pole (120) des Rotorkörpers (110) gleichzeitig zu umwickeln.

Die Erfindung betrifft ferner ein Nadelwickelverfahren zum Erzeugen der Polwicklungen (140) eines FSM-Rotors (100), wobei mehrere Pole (120) des Rotorkörpers (110) gleichzeitig umwickelt werden und dabei eine symmetrische Belastung des Rotorkörpers (110) erreicht und eine Unwuchtbildung vermieden wird.

## Beschreibung

Die vorliegende Erfindung betrifft eine Nadelwickelvorrichtung und ein Nadelwickelverfahren zum Erzeugen der Polwicklungen eines FSM-Rotors.

Eine als fremderregte Synchronmaschine (FSM) ausgebildete elektrische Maschine umfasst einen feststehenden Stator und einen sich bewegenden Rotor bzw. Läufer, nachfolgend als FSM-Rotor bezeichnet. Der FSM-Rotor weist aus einem elektrischen Leiter gebildete Wicklungen auf, die auch als Polwicklungen bzw. Polspulenwicklungen bezeichnet werden und das drehmomentbildende Rotor-Magnetfeld erzeugen. Eine solche fremderregte Synchronmaschine eignet sich insbesondere für den Antrieb eines elektrifizierten Kraftfahrzeugs.

Die Pol(spulen)wicklungen eines FSM-Rotors können mit der sogenannten Nadelwickeltechnik erzeugt bzw. hergestellt werden. Dabei wird der elektrische Leiter, bspw. ein isolierter Kupferdraht, mithilfe einer sogenannten Wickelnadel oder Ähnlichem um die zumeist als Zähne oder dergleichen ausgebildeten Pole bzw. Polkerne des Rotorkörpers herumgewickelt. Dies ist bspw. aus der DE 10 2019 214 972 A1 bekannt.

Zum allgemeinen Stand der Technik wird ferner auf die EP 1 966 872 B1, DE 10 2014 006 406 B4 und DE 10 2019 207 865 A1 hingewiesen.

Erfindungsgemäß werden entsprechend dem Patentanspruch 1 und dem nebengeordneten Patentanspruch 6 eine Nadelwickelvorrichtung bzw. Nadelwickelmaschine und ein Nadelwickelverfahren zum Erzeugen der Polwicklungen eines FSM-Rotors vorgeschlagen, die gegenüber dem o. g. Stand der Technik gleich mehrere Vorteile aufweisen. Vorteilhafte Ausführungsmöglichkeiten, Weiterbildungen und Ausgestaltungen der Erfindung ergeben sich analog für beide Erfindungsgegenstände aus den abhängigen Patentansprüchen, der nachfolgenden Beschreibung (dies schließt ausdrücklich auch beispielhaft und optional beschriebene Merkmale ein) sowie den Figuren.

Die erfindungsgemäße Nadelwickelvorrichtung zum Erzeugen der Pol(spulen)wicklungen eines FSM-Rotors durch Umwickeln der Pole eines Rotorkörpers mit Draht bzw. Wickeldraht oder dergleichen weist wenigstens zwei Wickelnadeln auf und ist dazu ausgebildet, dass mit diesen Wickelnadeln wenigstens zwei Pole des Rotorkörpers, insbesondere alle Pole des Rotorkörpers, gleichzeitig (d. h. zur selben Zeit) umwickelt werden können, insbesondere derart, dass gleichzeitig jeder zu umwickelnde Pol des Rotorkörpers von einer Wickelnadel umwickelt werden kann.

Ein betreffender Rotorkörper weist typischerweise sechs oder acht Pole auf, wobei auch mehr oder weniger Pole vorgesehen sein können.

Die erfindungsgemäße Nadelwickelvorrichtung kann selbstverständlich auch die sonst üblichen Einrichtungen aufweisen, wie bspw. eine Aufspanneinrichtung bzw. einen Werkstückträger für den zu bewickelnden Rotorkörper (s. u.) und/oder wenigstens eine Drahtzuführung und/oder wenigstens eine Drahtbremseinrichtung und/oder eine Steuereinrichtung (s. u.) etc.

Bevorzugt sind die Relativpositionen zwischen den Wickelnadeln und dem jeweils zu bewickelndem Pol (des Rotorkörpers) während des Wickelvorgangs unabhängig voneinander anpassbar bzw. veränderbar. Mit anderen Worten: die Wickelnadeln sind während des Wickelvorgangs separat bzw. unabhängig voneinander bewegbar, d. h. die Wickelnadeln können durch eine entsprechende Steuerung während des Wickelvorgangs asynchrone Bewegungen ausführen. Es kann allerdings auch vorgesehen sein, dass mehrere Wickelnadeln, insbesondere alle Wickelnadeln, gekoppelt sind, insbesondere derart, dass diese während des Wickelvorgangs synchrone Bewegungen (s. u.) ausführen. Bevorzugt ist eine mechanische Kopplung der betreffenden Wickelnadeln vorgesehen. In diesem Fall kann die Bewegung der gekoppelten Wickelnadeln mithilfe nur eines Antriebs bewerkstelligt werden. Es kann aber bspw. auch eine softwarebasierte Kopplung zwischen den jeweiligen Stellantrieben (s. u.) vorgesehen sein.

Bevorzugt ist für jede Wickelnadel eine eigene Nadelwickeleinheit mit einem Nadelträger (oder dergleichen) und wenigstens einem Stellantrieb zur Bewegung des Nadelträgers, einschl. der daran gehalterten Wickelnadel, während des Wickelvorgangs vorgesehen. Auf diese Weise kann jede Wickelnadel separat bzw. unabhängig von den anderen Wickelnadeln bewegt werden, wobei auch eine Kopplung vorgesehen sein kann (s. o.). Eine Nadelwickeleinheit kann selbstverständlich auch weitere übliche Elemente aufweisen, wie bspw. Gelenke, Führungselemente, Positionssensoren und dergleichen.

Ferner kann eine Aufspanneinrichtung für den zu bewickelnden Rotorkörper vorgesehen sein sowie auch eine Antriebseinrichtung, mit der während des Wickelvorgangs Dreh- und/oder Axialbewegungen des Rotorkörpers, insbesondere alternierende Dreh- und/oder Axialbewegungen des Rotorkörpers, herbeiführbar sind. Um solche Dreh- und/oder Axialbewegungen des Rotorkörpers zu ermöglichen, ist einerseits die Aufspanneinrichtung entsprechend ausgebildet und andererseits die Antriebseinrichtung in geeigneter Weise mit der Aufspanneinrichtung gekoppelt.

Bevorzugt ist auch eine Steuereinrichtung vorgesehen, welche dazu ausgebildet ist, die Nadelwickelvorrichtung während eines Wickelvorgangs derart zu steuern, dass mehrere bzw. wenigstens zwei Pole, insbesondere alle Pole, eines zu bewickelnden Rotorkörpers unter Verwendung einer korrespondierenden Anzahl von Wickelnadeln gleichzeitig umwickelt werden.

Unter einer korrespondierenden Anzahl wird insbesondere verstanden, dass die Anzahl der verwendeten Wickelnadeln der Anzahl der gleichzeitig zu umwickelnden Pole entspricht, sodass jeder zu umwickelnde Pol von einer Wickelnadel umwickelt wird.

Das erfindungsgemäße Nadelwickelverfahren zum Erzeugen der Polwicklungen eines FSM-Rotors durch Umwickeln der Pole eines Rotorkörpers mit Draht sieht vor, dass mehrere Pole des Rotorkörpers gleichzeitig umwickelt werden, d. h., die betreffenden Pole werden zur selben Zeit mit jeweils einem Draht umwickelt. Dies erfolgt insbesondere derart, dass sich während des Wickelvorgangs durch das gleichzeitige Umwickeln mehrerer Pole eine symmetrische Belastung des Rotorkörpers ergibt bzw. eine symmetrische Belastung des Rotorkörpers erreicht wird und eine Unwuchtbildung vermieden wird. Das erfindungsgemäße Nadelwickelverfahren wird insbesondere auf einer erfindungsgemäßen Nadelwickelvorrichtung ausgeführt.

Werden die Pole des Rotorkörpers, wie bislang praktiziert, nacheinander bzw. sequentiell einzeln umwickelt, wird dabei der Rotorkörper außermittig (d. h. außerhalb seiner Rotor- bzw. Drehachse) belastet, was eine Biegung der Rotorachse und in der Folge eine Unwucht des FSM-Rotors zur Folge haben kann. Das erfindungsgemäß vorgesehene gleichzeitige Umwickeln mehrerer Pole des Rotorkörpers wird insbesondere so ausgeführt, dass die dabei hervorgerufenen Belastungen des Rotorkörpers symmetrisch bzw. lastsymmetrisch, d. h. in Umfangsrichtung gleichmäßig verteilt, auftreten, sodass sich die resultierenden Biegekräfte bezüglich der Rotor- bzw. Drehachse gegenseitig aufheben und die Gefahr einer herstellungsbedingt verursachten Unwucht nicht mehr besteht.

Bevorzugt ist vorgesehen, dass quasi paarweise jeweils zwei (bezüglich der Rotorachse) gegenüberliegende bzw. um 180° versetzte Pole gleichzeitig umwickelt werden, bis alle Pole umwickelt sind. Damit ist gemeint, dass zunächst zwei gegenüberliegende Pole umwickelt werden, dann zwei weitere gegenüberliegende Pole usw., bis schließlich alle Pole des Rotorkörpers umwickelt sind. Sinngemäß kann vorgesehen sein, dass jeweils auch mehr als zwei Pole, bspw. drei um 120° versetzte Pole oder vier um 90° versetzte Pole, gleichzeitig umwickelt werden. Die gleichzeitig zu umwickelnden Pole werden so bestimmt, dass die dabei hervorgerufenen Belastungen des Rotorkörpers symmetrisch bzw. lastsymmetrisch sind. Der gesamte Wickelvorgang umfasst dann quasi mehrere Teilwickelvorgänge, bei denen jeweils wenigstens zwei Polwicklungen erzeugt werden, wofür die vorausgehenden und nachfolgenden Erläuterungen analog gelten.

Insbesondere ist vorgesehen, dass alle Pole des Rotorkörpers gleichzeitig umwickelt werden. Damit ist insbesondere gemeint, dass während eines Wickelvorgangs zum gleichzeitigen Umwickeln der Pole so viele Wickelnadeln verwendet werden, wie der Rotorkörper Pole aufweist.

Bevorzugt wird für das gleichzeitige Umwickeln mehrerer Pole des Rotorkörpers eine korrespondierende Anzahl (s. o.) von Wickelnadeln verwendet, die insbesondere während des Wickelvorgangs synchrone Bewegungen ausführen. Mit synchronen Bewegungen ist insbesondere gemeint, dass die Bewegungsbahnen (Trajektorien) der Wickelnadeln in Bezug auf den jeweils zu bewickelnden Pol bzw. Polkern des Rotorkörpers identisch oder zumindest im Wesentlichen identisch sind, was ferner bedeutet, dass auch der Umwicklungssinn der erzeugten Polwicklungen identisch ist. Dadurch wird u. a. die Steuerung des Wickelvorgangs vereinfacht, insbesondere dann, wenn die Wickelnadeln und der zu bewickelnde Rotorkörper während eines Wickelvorgangs aufeinander abgestimmte Bewegungen ausführen (ein diesbezügliches Konzept für eine kinematische Steuerung wird nachfolgend in Bezug auf die Figuren noch näher erläutert).

Bevorzugt werden die Polwicklungen als sogenannte orthozyklische Wicklungen erzeugt, d. h., bei den Polwicklungen des FSM-Rotors handelt es sich bevorzugt um orthozyklische Wicklungen.

Für das Umwickeln wird bevorzugt ein Kupferdraht, insbesondere ein isolierter Kupferdraht, verwendet. Der Rotorkörper ist bevorzugt aus gestapelten Rotorblechscheiben gebildet, die zu einem sogenannten Rotorblechpaket zusammengefasst sind. Ein solcher, aus einer Vielzahl von Rotorblechscheiben gebildeter Rotorkörper ist besonders anfällig für die oben beschriebene Verbiegung der Rotorachse, sodass sich die Erfindung insbesondere für das Umwickeln eines solchen Rotorkörpers eignet.

Die Erfindung hat viele Vorteile. Insbesondere kann die oben beschriebene Verbiegung der Rotorachse bzw. die Entstehung einer Unwucht verhindert werden. Ferner kann aber auch die Taktzeit für den Wickelvorgang verkürzt werden, wodurch sich wirtschaftliche Vorteile ergeben. Zudem ergeben sich auch fertigungslogistische Vorteile.

Die Erfindung wird nachfolgend in nicht einschränkender Weise anhand der Figuren näher erläutert. Die in den Figuren gezeigten und/oder nachfolgend erläuterten Merkmale können, auch unabhängig von bestimmten Merkmalskombinationen, allgemeine Merkmale der Erfindung sein und die Erfindung entsprechend weiterbilden.
- Fig. 1: veranschaulicht schematisch eine erste Ausführungsmöglichkeit der Erfindung.
- Fig. 2: veranschaulicht schematisch eine zweite Ausführungsmöglichkeit der Erfindung.

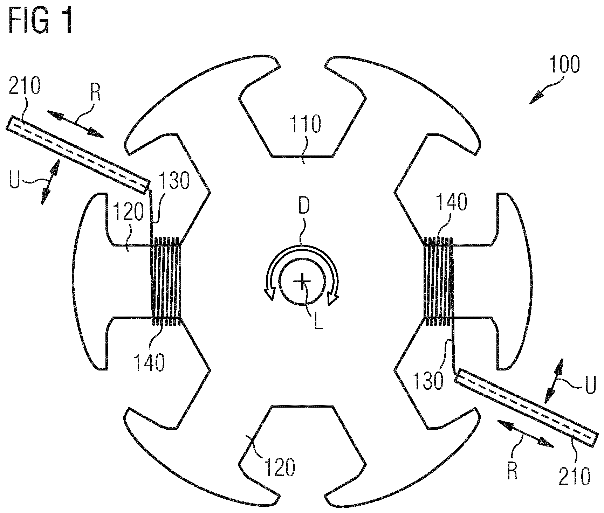

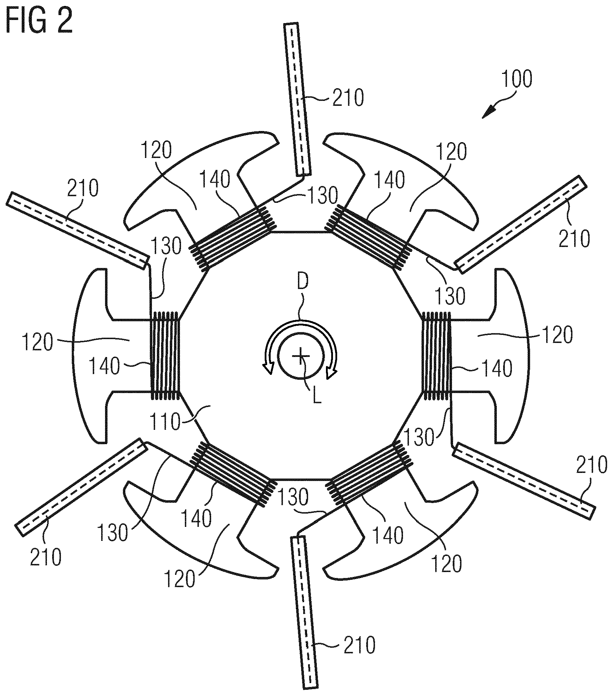

Der in Fig. 1 und Fig. 2 in einer axialen Draufsicht gezeigte Rotorkörper 110 eines herzustellenden FSM-Rotors 100 hat beispielhaft sechs identisch ausgebildete Pole bzw. Polkerne 120, die als Wickelkörper fungieren und auf denen jeweils eine Polwicklung 140 erzeugt bzw. abgelegt wird. Hierzu werden die Pole 120 mittels Nadelwickeltechnik mit einem Draht bzw. Wickeldraht 130 umwickelt. Der Rotorkörper 110 wird hierfür in einer in den Figuren nicht gezeigten Nadelwickelvorrichtung bzw. -maschine angeordnet, wobei es sich insbesondere um eine erfindungsgemäße Nadelwickelvorrichtung (wie oben beschrieben) handelt.

Erfindungsgemäß ist nun vorgesehen, dass mehrere Pole 120 des Rotorkörpers 110 gleichzeitig umwickelt werden, d. h., die betreffenden Pole 120 werden zur selben Zeit umwickelt. Hierzu werden mehrere als Wickelnadeln 210 ausgebildete Drahtführer verwendet. Insbesondere ist vorgesehen, dass eine der Anzahl der gleichzeitig zu umwickelnden Pole 120 entsprechende Anzahl bzw. eine korrespondierende Anzahl von Wickelnadeln 210 zum Einsatz kommen, von denen jede durch Ablegen eines Drahts 130 einen anderen Pol 120 des Rotorkörpers 110 umwickelt.

Bei der in Fig. 1 veranschaulichten Ausführungsmöglichkeit werden nacheinander jeweils zwei, bezüglich der Rotor- bzw. Drehachse L gegenüberliegende bzw. um 180° versetzte Pole 120 gleichzeitig umwickelt, bis alle Pole 120 umwickelt sind. Bevorzugt ist vorgesehen, dass die Wickelnadeln 120 dabei synchrone Bewegungen ausführen, wie obenstehend erläutert.

Ferner ist bevorzugt vorgesehen, dass die Wickelnadeln 210 und der zu bewickelnde Rotorkörper 110 während eines Wickelvorgangs oder Teilwickelvorgangs (s. o.) aufeinander abgestimmte Bewegungen ausführen. Ein bevorzugtes Konzept für eine entsprechende kinematische Steuerung sieht Folgendes vor: Die Wickelnadeln 210 führen bezüglich des Rotorkörpers 110 nur Bewegungen, insbesondere synchrone Bewegungen, in radialer Richtung R und in Umfangsrichtung U aus. Gegebenfalls führen die Wickelnadeln 210 auch noch Schwenkbewegungen, insbesondere synchrone Schwenkbewegungen, aus, um auf baulich bedingte Störkonturen am Rotorkörper 110 zu reagieren. Der Rotorkörper 110 führt nur Axialbewegungen (senkrecht zur Blatt- bzw. Darstellungsebene), insbesondere alternierende Axialbewegungen, sowie auch Rotations- bzw. Drehbewegungen D, insbesondere alternierende Drehbewegungen aus. Die Steuereinrichtung ist entsprechend ausgebildet.

Vorzugsweise sind die Bewegungen der Wickelnadeln 210, insbesondere die synchronen Bewegungen der Wickelnadeln, und die Bewegungen des Rotorkörpers 110 kinematisch so aufeinander abgestimmt, dass die Wickelnadeln 210 (nur) kleinstmögliche Bewegungen, insbesondere mit kleinstmöglichen Strecken bzw. Stellwegen, ausführen. Dadurch wird ein vergleichsweise ruhiger Wickelvorgang erreicht. Ferner werden zum einen die Steuerung der Nadelwickelvorrichtung bzw. des Wickelvorgangs erheblich vereinfacht und zum anderen ein vergleichsweise einfacher Aufbau der Nadelwickeleinheiten ermöglicht, was insbesondere auch in Hinblick auf die Anpassung und Verwendung einer vorhandenen Nadelwickelmaschine vorteilhaft ist.

Bei der in Fig. 2 veranschaulichten Ausführungsmöglichkeit werden alle Pole 120 des Rotorkörpers 110 gleichzeitig umwickelt. Die Wickelnadeln 210 sind quasi um den Rotorkörper 110 herum angeordnet. Ansonsten gelten analog die vorausgehenden Erläuterungen zur ersten Ausführungsmöglichkeit der Fig. 1.

## Patentansprüche

1. Nadelwickelvorrichtung zum Erzeugen der Polwicklungen (140) eines FSM-Rotors (100) durch Umwickeln der Pole (120) eines Rotorkörpers (110) mit Draht (130),
**dadurch gekennzeichnet, dass**
die Vorrichtung wenigstens zwei Wickelnadeln (210) aufweist und dazu ausgebildet ist, mit diesen Wickelnadeln (210) wenigstens zwei Pole (120) des Rotorkörpers (110) gleichzeitig zu umwickeln.

2. Nadelwickelvorrichtung nach Anspruch 1,
**dadurch gekennzeichnet, dass**
die Wickelnadeln (210) unabhängig voneinander bewegbar sind.

3. Nadelwickelvorrichtung nach einem der vorhergehenden Ansprüche, **dadurch gekennzeichnet, dass**
für jede Wickelnadel (210) eine eigene Nadelwickeleinheit mit einem Nadelträger und wenigstens einem Stellantrieb zur Bewegung des Nadelträgers vorgesehen ist.

4. Nadelwickelvorrichtung nach einem der vorhergehenden Ansprüche, **dadurch gekennzeichnet, dass**
eine Aufspanneinrichtung für den zu bewickelnden Rotorkörper vorgesehen ist sowie eine Antriebseinrichtung, mit der Dreh- und/oder Axialbewegungen des Rotorkörpers herbeiführbar sind.

5. Nadelwickelvorrichtung nach einem der vorhergehenden Ansprüche, **dadurch gekennzeichnet, dass**
eine Steuereinrichtung vorgesehen ist, welche dazu ausgebildet ist, die Nadelwickelvorrichtung derart zu steuern, dass wenigstens zwei Pole (120) eines zu bewickelnden Rotorkörpers (110) unter Verwendung einer korrespondierenden Anzahl von Wickelnadeln (210) gleichzeitig umwickelt werden.

6. Nadelwickelverfahren zum Erzeugen der Polwicklungen (140) eines FSM-Rotors (100) durch Umwickeln der Pole (120) eines Rotorkörpers (110) mit Draht (130), insbesondere mithilfe einer Nadelwickelvorrichtung gemäß einem der vorhergehenden Ansprüche, **dadurch gekennzeichnet, dass**
mehrere Pole (120) des Rotorkörpers (110) gleichzeitig umwickelt werden und dass dabei eine symmetrische Belastung des Rotorkörpers (110) erreicht und eine Unwuchtbildung vermieden wird.

7. Verfahren nach Anspruch 6,
**dadurch gekennzeichnet, dass**
alle Pole (120) des Rotorkörpers (110) gleichzeitig umwickelt werden.

8. Verfahren nach Anspruch 6 oder 7,
**dadurch gekennzeichnet, dass**
für das gleichzeitige Umwickeln mehrere Pole (120), insbesondere aller Pole (120), des Rotorkörpers (110) eine korrespondierende Anzahl von Wickelnadeln (210) verwendet wird, die insbesondere synchrone Bewegungen ausführen.

9. Verfahren nach Anspruch 8,
**dadurch gekennzeichnet, dass**
die Wickelnadeln (210) und der zu bewickelnde Rotorkörper (110) aufeinander abgestimmte Bewegungen ausführen, insbesondere mit kleinstmöglichen Bewegungen der Wickelnadeln (210).

10. Verfahren nach Anspruch 6, 7, 9 oder 9,
**dadurch gekennzeichnet, dass**
der Rotorkörper (110) aus gestapelten Rotorblechscheiben gebildet ist.
